# EUROPÄISCHE PATENTSCHRIFT

(11) **EP 0 788 271 B1**
(45) Veröffentlichungstag und Bekanntmachung des Hinweises auf die Patenterteilung: **01.10.2008**
(21) Anmeldenummer: 97400135.6
(22) Anmeldetag: 14.01.1997
(51) Int. Cl.: H04M 15/00

(54) **Schaltungsanordnung zur Erzeugung von Gebührenimpulsen**
Circuit arrangement for generation of metering pulses
Agencement de circuit pour la génération d'impulsions de taxation

(30) Priorität: 01.02.1996 DE 19603530
(43) Veröffentlichungstag der Anmeldung: 06.08.1997
(73) Patentinhaber: Nvidia International, Inc., Bishop's Court Hill Saint Michael (BB)
(72) Erfinder: Klamt, Werner, Dipl.-Ing., 31191 Algermissen (DE); Bratschke, Thomas, Dipl.-Ing., 30823 Garbsen (DE)
(74) Vertreter: Dilg, Haeusler, Schindelmann Patentanwaltsgesellschaft mbH

(56) Entgegenhaltungen:
- EP-A- 0 668 687
- DE-A- 3 516 007
- DE-A- 3 636 563
- US-A- 4 829 517

## Beschreibung

Die Erfindung bezieht sich auf eine Schaltungsanordnung zur Erzeugung von Gebührenimpulsen bei der digitalen Nachrichtenübertragung, bei welcher Teilnehmer eines Telefonnetzes über Kabel mit einer Zentrale verbunden sind, bei welcher die Telefone der Teilnehmer über elektrische Anschlussleitungen an eine mit der Vermittlungsstelle verbundene Schnittstelleneinheit angeschlossen sind, die auf der Seite der Vermittlungsstelle eine digitale und auf der Seite der Teilnehmer mindestens eine analoge Schnittstelle aufweist, und bei welcher von einer in der Schnittstelleneinheit vorhandenen Erzeugerschaltung in Abhängigkeit von Signalen die von der Vermittlungsstelle übertragen werden, Gebührenimpulse erzeugt und zum jeweiligen Teilnehmer übertragen werden (DE 36 36 563 A1).

EP 0668687 betrifft einen Vorrichtung zum Erzeugen eines Zählsignals in einem Kommunikationssystem, welches eine Teilnehmeranschluss Schnittstellenschaltung (SLIC Vorrichtung) und einen Teilnehmeranschluss aufweist.

Aus der DE 35 16 007 C2 ist eine Schaltung zur Erzeugung von Gebührenimpulsen bei der analogen Nachrichtenübertragung bekannt. Ein entsprechender Gebührenanzeiger wird dabei von der Telefonzentrale über die Telefonleitung durch gesonderte Gebührensignale gesteuert. Zur Anpassung des Pegels der Gebührensignale an die Benutzerleitung und ihre spezifische Gesamtimpedanz wird an einem Punkt der Schaltung ein Signal abgenommen, das ein Abbild des Gesamtgesprächssignals und des Gebührensignals ist. Das dadurch gewonnene

Gesamtsignal wird gleichgerichtet und einem Komparator aufgegeben, der dasselbe mit einem Bezugssignal vergleicht. Wenn die Amplitude des gleichgerichteten Signals grösser als die Amplitude des Bezugssignals ist, wird ein Signal erzeugt, dessen Pegel durch Einsatz eines Speicherelements konstant gehalten wird.

Bei der digitalen Nachrichtenübertragung entsprechend der eingangs erwähnten DE 36 36 563 A1 kann der Gebührenimpuls von beispielsweise 16 kHz nicht vom Amt her übertragen werden. Er muß nach Empfang eines entsprechenden Signals beim Teilnehmer bzw. in der Schnittstelleneinheit (SU) erzeugt werden, an welche das Telefon des Teilnehmers über eine elektrische Anschlußleitung angeschlossen ist. Dabei muß sichergestellt sein, daß auch bei maximaler Länge der Anschlußleitung zwischen der SU und dem Telefon des Teilnehmers eine ausreichend hohe Spannung von beispielsweise 140 mV ankommt. Dafür muß in der SU ein Gebührenimpuls mit einem Pegel von beispielsweise 4,2 Volt erzeugt werden. Die maximale Länge der Anschlußleitung beträgt dabei beispielsweise für ein Kabel mit Leitern von 0,4 mm Durchmesser 4,5 km.

Alle Elemente der SU einschließlich der Stromquelle bzw. Stromquellen müssen einerseits für diese maximale Spannung ausgelegt werden. Andererseits muß auch der Extremfall "Leerlauf" berücksichtigt werden, wenn ein bei 16 kHz sehr hochohmiges Telefon mit sehr kurzer Leitung bzw. direkt an die SU angeschlossen wird. Rückwirkungen auf die SU treten nur dann nicht auf, wenn ein derart starker Gebührenimpuls zu einem Telefon mit maximal langer Anschlußleitung übertragen wird. Der Wellenwiderstand derartiger Anschlußleitungen stellt eine ausreichende "Last" dar. Bei kürzeren Anschlußleitungen kann der Regelbereich der Speisestromquelle des jeweiligen Teilnehmers durch die an ihr auftretende Wechselspannungsamplitude überschritten werden. Dies passiert beispielsweise bei dem oben erwähnten Leerlauf dann, wenn die Summe aus der Speisespannung des Telefons und der ihr überlagerten Gebührenwechselspannung den Wert der geregelten Vorspannung der Speisestromquelle erreicht oder sogar überschreitet.

Der Erfindung liegt die Aufgabe zugrunde, die eingangs beschriebene Schaltungsanordnung so weiterzubilden, daß Telefone mit beliebig langen Anschlußleitungen ohne Störung der SU bedient werden können.

Diese Aufgabe wird gemäß der Erfindung dadurch gelöst,
- daß innerhalb der SU für jeden Teilnehmer jeweils beim Fließen von Schleifenstrom im Stromkreis seines Telefons eine der Länge der Anschlußleitung proportionale Spannung gemessen wird, die von der erforderlichen Versorgungsspannung einer an der Anschlußleitung angeschlossenen Speisestromquelle abgeleitet wird, und
- daß der dabei gewonnene Spannungswert zur Einstellung des Spannungspegels der von der Erzeugerschaltung ausgehenden Gebührenimpulse verwendet wird.

Mit dieser Schaltungsanordnung wird der Pegel der Gebührenimpulse in Abhängigkeit von der Länge der jeweiligen Anschlußleitung bemessen. Es ist dadurch sichergestellt, daß die Wechselspannungsamplitude der Gebührenimpulse von der Erzeugerschaltung immer auf einen zulässigen Wert eingestellt wird. Der Regelbereich der Speisestromquelle für den Schleifenstrom kann also nicht überschritten werden. Außerdem kann mit dieser Schaltungsanordnung die Aussteuerung der Schleifenstromeinspeisung etwa halbiert werden. Dadurch kann auch eine Halbierung der erforderlichen Spannungsdifferenz zwischen der Vorspannung der Speisestromquelle und der Telefonspeisespannung erhalten werden. Die Verlustleistung dieses Schaltungsteils wird dann ebenfalls halbiert. Ein weiterer Vorteil dieser Schaltungsanordnung ist die gute Reproduzierbarkeit der verschiedenen Pegel für die Gebührenimpulse in der Serienfertigung. Besonders vorteilhaft ist die Schaltungsanordnung bei kurzen Anschlußleitungen und bei direkt an die SU angeschlossenen Telefonen.

Ein Ausführungsbeispiel des Erfindungsgegenstandes ist in den Zeichnungen dargestellt.

Es zeigen:
Fig. 1 schematisch eine digitale Übertragungsstrecke.
Fig. 2 einen Teil der Schaltungsanordnung nach der Erfindung als Blockschaltbild.
Fig. 3 einen anderen Teil der Schaltungsanordnung.
Fig. 4 und 5 eine gegenüber den Fig. 2 und 3 abgewandelte Ausführungsform der Schaltungsanordnung.

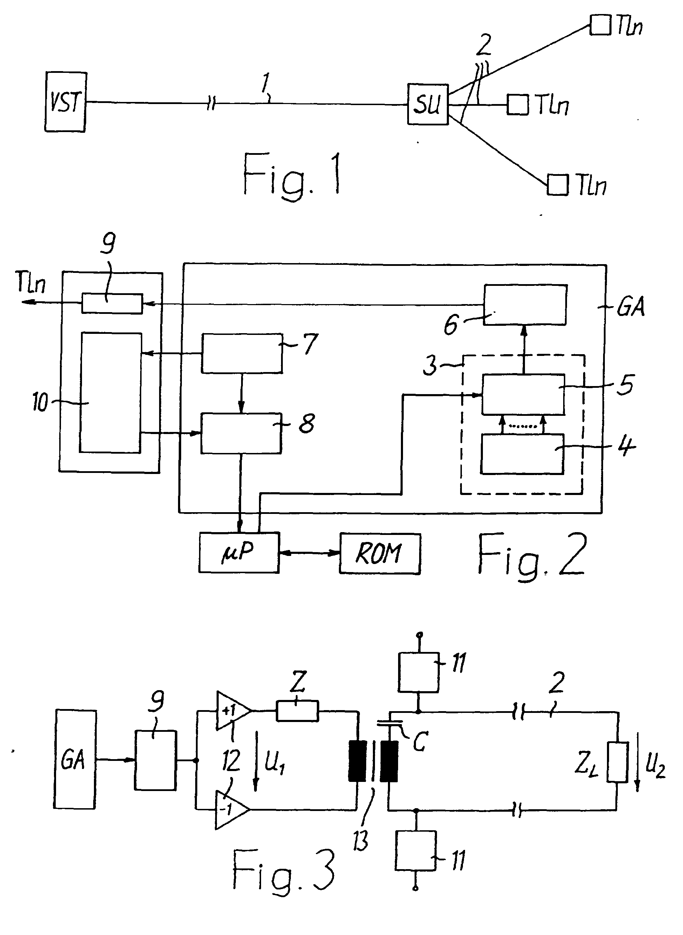

In Fig. 1 ist schematisch ein Ausschnitt aus einem Telefonnetz dargestellt. An eine Vermittlungsstelle VST sind Teilnehmer Tln über Kabel 1 angeschlossen. Im Bereich der Tln ist eine Schnittstelleneinheit SU in den Übertragungsweg eingeschaltet. Die SU hat auf der Seite der VST eine digitale Schnittstelle zur digitalen Nachrichtenübertragung über das Kabel 1 Die Tln sind über analoge Schnittstellen mit der SU verbunden, und zwar über elektrische Anschlußleitungen 2. Die SU ist in einer möglichen Ausführungsform in den Fig. 2 und 3 genauer dargestellt.

Die SU weist als intelligentes Bauteil ein Gate-Array GA auf, in dem eine gestrichelt umrandete Erzeugerschaltung 3 zum Erzeugen von Gebührenimpulsen enthalten ist. Diese umfaßt eine Anzahl von Sinustabellen mit Steuerschaltung 4 und einen Wahlschalter 5. Zum GA gehören außerdem ein Pulsbreiten-Modulator 6, eine Triggerschaltung 7 und eine Meßschaltung 8. Die Meßschaltung 8 ist mit einem Mikroprozessor µP verbunden, der Zugriff zu einem ROM hat. Die analoge Schnittstelle der SU zu den Tln umfaßt ein Tiefpaßfilter 9 und einen Gleichspannungswandler 10 (DC/DC-Wandler 10). Das Tiefpaßfilter 9 ist mit dem Pulsbreiten-Modulator 6 verbunden. Der DC/DC-Wandler 10 ist an die Triggerschaltung 7 und die Meßschaltung 8 angeschlossen.

An das Tiefpaßfilter 9 ist gemäß Fig. 3 ein Verstärker 12 mit zwei Ausgängen für das NF-Signal angeschlossen. An diesen beiden Ausgängen wird die Wechselspannung U₁ für die Gebührenimpulse erzeugt. Der Innenwiderstand der Schaltung ist durch die Abschlußimpedanz Z bestimmt. Ein Übertrager 13 dient der galvanischen Entkopplung. Sekundärseitig ist die Anschlußleitung 2 eines Tln an den Übertrager 13 angeschlossen, die durch die Impedanz Z_{L} symbolisiert ist. Der Anschluß des Tln wird durch die Speisestromquelle 11 gespeist. Beim Tln fällt die Wechselspannung U₂ ab, die mit vorliegender Schaltungsanordnung auf den richtigen, von der Länge der Anschlußleitung 2 abhängigen Wert eingestellt wird. Der Kondensator C dient der Gleichstromentkopplung des Übertragers 13.

Die Schaltung nach den Fig. 2 und 3 arbeitet wie folgt:

Zur Anpassung des Pegels der Gebührenimpulse an die Länge der Anschlußleitung 2 eines Tln wird ein indirektes Meßverfahren angewendet. Dabei wird aus der erforderlichen Versorgungsspannung der Speisestromquelle 11 auf den Schleifenwiderstand der Anschlußleitung 2 geschlossen. Daraus ergibt sich ein Anhaltswert für die Länge der Anschlußleitung 2 und die Dämpfungseigenschaften derselben.

Die Versorgungsspannung für die aus Fig. 3 ersichtliche Speisestromquelle 11 kann zur Minimierung der Verlustleistung über den getakteten DC/DC-Wandler 10 erzeugt werden, der über einen Triggerimpuls der Triggerschaltung 7 synchronisiert wird (Schaltfrequenz etwa 93 kHz). Der DC/DC-Wandler 10 stellt selbständig die erforderliche Spannung dadurch ein, daß er beispielsweise einen Transistor eine bestimmte Zeit nach dem Triggerimpuls noch eingeschaltet läßt. Die Spannung wird dabei umso größer, je länger die Einschaltdauer ist.

Diese Einschaltdauer des Transistors im DC/DC-Wandler 10 kann das GA mit Hilfe der Meßschaltung 8 ermitteln, indem zu Beginn des Impulses ein Zähler bei "0" startet und am Ende des Impulses anhält. Den Zählerstand liest der Mikroprozessor µP aus dem GA aus, um damit im ROM einen dazu passenden Wert für die Amplitude des zu erzeugenden Gebührenimpulses nachzuschlagen. Die Zuordnung der Meßwerte (Zählerstand) zu bestimmten Amplituden kann z. B. im Labor an einem Muster eingestellt worden sein. Mit der ermittelten Amplitude wird dann vom µP der Wahlschalter 5 in der Erzeugerschaltung 3 des GA so eingestellt, daß der Gebührenimpuls mit dem korrekten Pegel beim jeweiligen Tln ankommt. Das gilt auch für alle folgenden Gebührenimpulse dieses Tln.

Die Erzeugerschaltung 3 im GA enthält beispielsweise acht verschiedene Sinustabellen mit acht linear abgestuften Signalamplituden. Der µP kann über den Wahlschalter 5 für die Tln eine Tabelle mit dem passenden Amplitudenwert auswählen. Jede der acht Tabellen nähert eine Periode einer Sinusschwingung durch Diskretisierung beispielsweise in 32 Zeitschritten an. Jedem Zeitschritt ist ein Zahlenwert zugeordnet, der die Höhe der Sinuskurve zu diesem Zeitpunkt darstellt. Die Schaltung im GA liest diese Zahlenwerte zyklisch aus, indem sie nach dem Zeitschritt "32" wieder bei "1" beginnt. Der Pulsbreiten-Modulator 6 ermöglicht die Rückwandlung der Zahlenwerte in eine kontinuierliche, analoge Sinusschwingung mit Hilfe des Tiefpaßfilters 9.

Die Einspeisung der Gebührenimpulse findet gemäß Fig. 3 über das Tiefpaßfilter 9, das die vom GA kommenden Impulse in eine Sinusschwingung wandelt, und die NF-Ausgänge des Verstärkers 12 statt, zwischen denen die Wechselspannung U₁ erzeugt wird. Der Wert für die Abschlußimpedanz Z wird zweckmäßig so gewählt, daß er im Sprachfrequenzband (300 Hz bis 3400 Hz) die Impedanz Z_{L} der Anschlußleitung des jeweiligen Teilnehmers nachbildet, damit Anpassung besteht. In Deutschland beträgt dieser Wert im Sprachband 900 Ohm, komplex. Bei der Gebührenfrequenz von 16 kHz hat die Impedanz Z_{L} einer maximal langen Anschlußleitung einen Wert von etwa 200 Ohm. Die Abschlußimpedanz Z hat dann einen Wert von etwa 240 Ohm, so daß die geforderte Anpassung besteht. Die Spannung U₂ ist dann etwa gleich U₁/2. Der Regelbereich der Speisestromquelle 11 wird nicht überschritten

Wird die SU direkt mit einem Telefon beschaltet, dessen Innenwiderstand im Sprachband ebenfalls angepaßt ist, das aber bei 16 kHz sehr hochohmig sein kann (Z_{L}->∞), so besteht auf der rechten Seite des Übertragers 13 im Extremfall Leerlauf. U₂ wäre dann gleich U₁. Die Schaltung wäre also nicht angepaßt. Je nach Länge der Anschlußleitung kann Z_{L} auch Werte zwischen den beiden oben beschriebenen Extremfällen - U₂ = U₁/2 und U₂ = U₁ - annehmen, mit einer mehr oder weniger guten Anpassung in herkömmlicher Technik. In allen Fällen wird mit vorliegender Schaltungsanordnung durch Erfassung der Länge der Anschlußleitung 2 eine richtige Bemessung des Pegels der Gebührenimpulse erreicht.

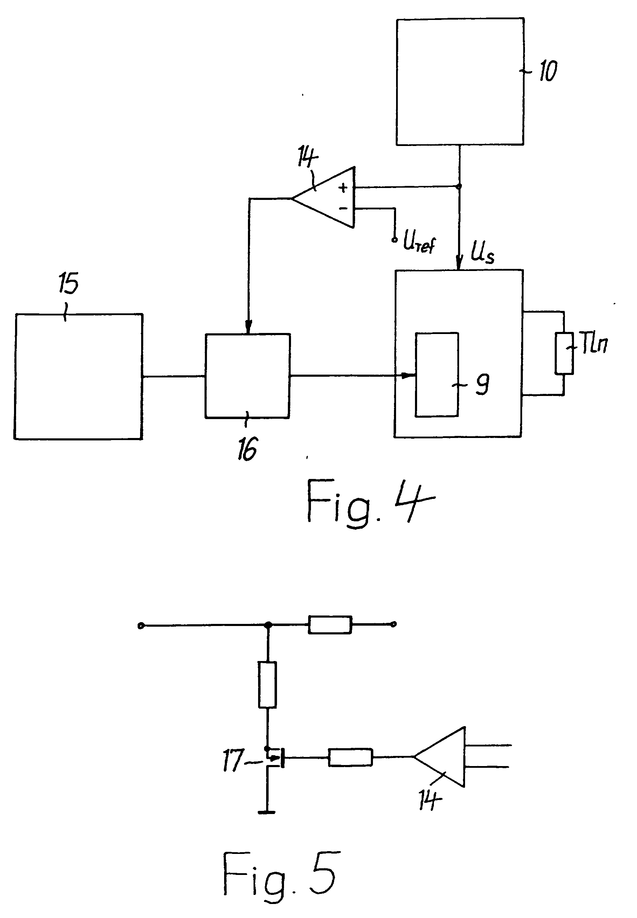

Eine von den Fig. 2 und 3 abweichende, vereinfachte Ausführungsform der Schaltungsanordnung geht aus den Fig. 4 und 5 hervor. Mit dem hier eingesetzten Komparator 14 lassen sich zwei unterschiedliche Pegel für die Gebührenimpulse einstellen. Der eine Pegel entspricht beispielsweise der maximal möglichen Länge der Anschlußleitung 2. Der andere Pegel wird beispielsweise für etwa 1/3 der maximalen Länge der Anschlußleitung 2 festgelegt.

Der DC/DC-Wandler 10 liefert die in Abhängigkeit von der Länge der Anschlußleitung 2 geregelte Versorgungsspannung U_{S} für den jeweiligen Tln. Die Versorgungsspannung U_{S} liegt einerseits an dem aus Fig. 3 ersichtlichen Stromkreis des Tln an. Sie wird andererseits dem einen Eingang des Komparators 14 zugeführt. Am zweiten Eingang des Komparators 14 liegt eine Referenzspannung U_{ref}, die dem verminderten Pegel für die Gebührenimpulse entspricht. Bei Längen der Anschlußleitung 2, die über 1/3 der maximalen Länge liegen, wird dem Tiefpaßfilter 9 aus einer einen festen Pegel liefernden Erzeugerschaltung 15 der maximale Pegel für die Gebührenimpulse zugeführt.

Bei kleineren Längen der Anschlußleitung wird durch den Komparator 14 ein schaltbares Dämpfungsglied 16 eingeschaltet, durch welches der Pegel der Gebührenimpulse auf den verminderten Wert begrenzt wird. Das Dämpfungsglied 16 kann gemäß Fig. 5 beispielsweise einen Feldeffekttransistor 17 aufweisen, dessen Stromdurchlässigkeit durch den Komparator 14 verändert wird.

Die sonstige Wirkungsweise der Schaltungsanordnung nach den Fig. 4 und 5 entspricht der für die Fig. 2 und 3 beschriebenen Wirkungsweise.

## Patentansprüche

1. Schaltungsanordnung zur Erzeugung von Gebührenimpulsen bei der digitalen Nachrichtenübertragung, bei welcher Teilnehmer eines Telefonnetzes über Kabel mit einer Zentrale verbunden sind, bei welcher die Telefone der Teilnehmer über elektrische Anschlußleitungen an eine mit der Vermittlungsstelle verbundene Schnittstelleneinheit angeschlossen sind, die auf der Seite der Vermittlungsstelle eine digitale und auf der Seite der Teilnehmer mindestens eine analoge Schnittstelle aufweist, und bei welcher die Schnittstelleneinheit eine Erzeugerschaltung aufweist, die so ausgestaltet ist, daß in Abhängigkeit von Signalen, die von der Vermittlungsstelle übertragen werden, Gebührenimpulse erzeugt und zum jeweiligen Teilnehmer überträgt, **dadurch gekennzeichnet, daß** die Schnittstelleneinheit (SU) weiter so ausgestaltet ist, daß für jeden Teilnehmer (Tln) jeweils beim Fließen von Schleifenstrom im Stromkreis seines Telefons eine der Länge der Anschlußleitung (2) proportionale Spannung gemessen wird, die von der erforderlichen Versorgungsspannung einer an der Anschlußleitung (2) angeschlossenen Speisestromquelle (11) abgeleitet wird, und daß der dabei gewonnene Spannungswert zur Einstellung des Spannungspegels der von der Erzeugerschaltung (3, 15) ausgehenden Gebührenimpulse verwendet wird.

2. Schaltungsanordnung nach Anspruch 1, **dadurch gekennzeichnet, daß** die Schnittstelleneinheit weiter so ausgestaltet ist, daß der Spannungswert einem Prozessor (µP) aufgegeben wird, in dem eine unterschiedlichen Längen der Anschlußleitung (2) entsprechende Vergleichstabelle abgespeichert ist, von welchem ein dem erforderlichen Spannungspegel entsprechender Befehl an die Erzeugerschaltung (3) gegeben wird.

3. Schaltungsanordnung nach Anspruch 1, **dadurch gekennzeichnet daß** die Schnittstelleneinheit weiter so ausgestaltet ist, daß der Spannungswert einem Komparator (14) aufgegeben wird, dessen Ausgang über ein schaltbares Dämpfungsglied (16) mit der Erzeugerschaltung (15) verbunden ist.

## Claims

1. Circuit arrangement for generating charge impulses upon digital information transmission wherein subscribers of a telephone network are connected with a central via cable, wherein the telephones of the subscribers are connected to an interface unit connected to a exchange via electric connection lines, which interface unit on the side of the exchange comprises a digital and on the side of the subscriber at least one analog interface and wherein the interface unit comprises a generator circuit which is adapted so that as a function of signals which are transmitted by the exchange, charge impulses are generated and transmitted to the respective subscriber, **characterized in that** the interface unit (SU) is further adapted so that for each subscriber (TLN) each time loop current flows in the circuit of the subscriber's telephone a voltage which is proportional to the length of the connection line (2) is measured which is derived from the required supply voltage of a feed current source (11) connected to the connection line (2), and that the voltage value gained in the process is utilized for setting the voltage level of the charge impulses emanating from the generator circuit (3, 15).

2. The circuit arrangement according to Claim 1, **characterized in that** the interface unit is further adapted so that the voltage value is supplied to a processor (µP) in which a comparative table corresponding to different lengths of the connection line (2) is stored, by which a command corresponding to the required voltage level is passed to the generator circuit (3).

3. The circuit arrangement according to Claim 1, **characterized in that** the interface unit is further adapted so that the voltage value is supplied to a comparator (14) whose output is connected with the generator circuit (15) via a switchable attenuator (16).

## Revendications

1. Arrangement de circuit pour la génération d'impulsions de taxation lors de la transmission d'informations numériques, tel que des abonnés d'un réseau téléphonique sont reliés à un central par câble, tel que les téléphones des abonnés sont connectés par des lignes de raccordement électriques à une unité d'interfaces reliée au central téléphonique, qui comporte une interface numérique du côté du central téléphonique et au moins une interface analogique du côté des abonnés, et tel que l'unité d'interfaces comporte un circuit de génération qui est adapté pour, en fonction de signaux qui sont transmis depuis le central téléphonique, générer des impulsions de taxation et les transmettre à l'abonné respectif, **caractérisé en ce que** l'unité d'interfaces (SU) est en outre conçue de sorte que, pour chaque abonné (Tln) respectivement, une tension proportionnelle à la longueur de la ligne de raccordement (2) est mesurée lors de l'écoulement d'un courant de boucle dans le circuit électrique de son téléphone, qui est déduite de la tension d'alimentation requise d'une source de courant d'alimentation (11) connectée à la ligne de raccordement (2), et que la valeur de tension ainsi obtenue est utilisée pour le réglage du niveau de tension des impulsions de taxation sortant du circuit de détermination (3, 15).

2. Arrangement de circuit selon la revendication 1, **caractérisé en ce que** l'unité d'interfaces est en outre adaptée pour que la valeur de tension soit fournie à un processeur (µP), dans lequel est mémorisée une table de comparaison correspondant à des longueurs différentes de la liaison de raccordement (2), de lequel une commande correspondant au niveau de tension requis est fournie au circuit de génération (3).

3. Arrangement de circuit selon la revendication 1, **caractérisé en ce que** l'unité d'interfaces est en outre adaptée pour que la valeur de tension soit fournie à un comparateur (14), dont la sortie est reliée au circuit de génération (15) par un élément d'atténuation réglable (16).
